# FASCICULE DE BREVET EUROPEEN

(11) **EP 3 394 571 B1**
(45) Date de publication et mention de la délivrance du brevet: **30.07.2025**
(21) Numéro de dépôt: 16825536.2
(22) Date de dépôt: 16.12.2016
(51) Int. Cl.: G01C 23/00, G01P 3/36, G05D 1/00, G01C 21/36

(54) **PROCÉDÉ ET DISPOSITIF DE DÉTERMINATION DE POSITIONS SPATIALES ET DE PARAMÈTRES CINÉMATIQUES D'OBJETS DANS L'ENVIRONNEMENT D'UN VÉHICULE**
VERFAHREN UND VORRICHTUNG ZUR BESTIMMUNG VON RÄUMLICHEN POSITIONEN UND KINEMATIKPARAMETERN VON OBJEKTEN IN DER UMGEBUNG EINES FAHRZEUGES
METHOD AND DEVICE FOR DETERMINING SPATIAL POSITIONS AND KINEMATIC PARAMETERS OF OBJECTS IN THE ENVIRONMENT OF A VEHICLE

(30) Priorité: 22.12.2015 FR 1563078
(43) Date de publication de la demande: 31.10.2018
(73) Titulaire: Ampere SAS, 92100 Boulogne-Billancourt (FR)
(72) Inventeur: CHIRCA, Mihai, 75015 Paris (FR); MARTIN, Guillaume, 78000 Versailles (FR)
(74) Mandataire: Renault Group
(86) Numéro de dépôt international: PCT/FR2016/053521
(87) Numéro de publication internationale: WO 2017/109359

(56) Documents cités:
- CN-A- 104 899 554
- US-A- 3 120 421
- US-A1- 2015 354 976

## Description

### 1. Domaine de l'invention

L'invention concerne le domaine de la détermination de positions spatiales et de paramètres cinématiques d'objets dans l'environnement d'un véhicule. Elle concerne plus particulièrement un procédé de détermination de positions spatiales et de paramètres cinématiques d'objets dans l'environnement d'un véhicule automobile, ledit véhicule étant équipé d'au moins une caméra pour capturer des images de son environnement. Elle concerne également un dispositif de détermination de positions spatiales et de paramètres cinématiques d'objets dans l'environnement d'un véhicule automobile embarqué à bord dudit véhicule, ainsi qu'un véhicule automobile.

### 2. Art antérieur

Les dispositifs de détection permettant de déterminer la distance et la vitesse d'un objet cible sur la route sont devenus des équipements habituels dans les véhicules actuels. Ces dispositifs comprennent classiquement un capteur de position, par exemple un radar ou une caméra. Ils comprennent également une unité de calcul de distances et de vitesses pour générer des informations nécessaires aux contrôles de sécurité.

Les dispositifs avec radar présentent la limitation suivante : leur portée est limitée à 250 mètres. Or cette portée est trop courte pour prévenir des dangers tels qu'une manœuvre de dépassement risquée.

En ce qui concerne les dispositifs utilisant une caméra, l'unité de calcul met en œuvre des techniques de calcul reposant sur le changement des dimensions de l'objet. En utilisant l'homographie, la variation de la taille de l'objet et de la route donne une position de l'objet dont la précision dépend de la qualité de la caméra. Des exemples de ce type de dispositif peuvent se trouver dans les documents US3120421 ou US2015/354976.

Les dispositifs avec caméra présentent la limitation suivante : les caméras avec une très bonne résolution sont onéreuses et les caméras classiques présentent une résolution insuffisante dans certains cas pour fournir à l'unité de calcul une série d'images exploitables, en particulier lorsque l'image de l'objet cible est très petite. Dans ce cas, l'unité de calcul ne peut pas déterminer avec suffisamment de précision la distance et la vitesse d'un objet cible pouvant constituer un danger.

D'autres causes peuvent rendre la série d'images inexploitables par l'unité de calcul telles qu'un mauvais réglage des dispositifs optiques ou une luminosité réduite.

### 3. Objectifs de l'invention

La présente invention propose une solution visant à pallier les inconvénients précités. Un objectif de l'invention est de permettre une détermination performante de positions spatiales et de paramètres cinématiques d'objets mobiles ou statiques situés dans l'environnement d'un véhicule en utilisant une ou plusieurs caméras.

### 4. Résumé de l'invention

Le principe de l'invention est d'utiliser des éléments sensiblement identiques régulièrement espacés dans l'environnement du véhicule afin d'estimer avec plus de précision des positions spatiales et des paramètres cinématiques d'objets cibles. L'augmentation de la performance de cette détermination de positions spatiales et de paramètres cinématiques repose donc sur le positionnement d'objets cibles par rapport à des éléments sensiblement identiques régulièrement espacés.

L'invention a pour objet un procédé de détermination d'au moins une position spatiale ou un paramètre cinématique selon la revendication 1.

On entend par « éléments sensiblement identiques et régulièrement espacés » des éléments de même type et pour lesquels la distance calculée entre deux éléments consécutifs est la même. Par exemple une rangée de dix arbres plantés tous les cinquante mètres le long de la route est considérée comme un ensemble d'éléments sensiblement identiques régulièrement espacés.

On entend par « classe » un ensemble d'éléments de même type. Par exemple les lignes pointillées de marquage au sol appartiennent à la même classe.

Selon un mode de réalisation particulier, la détection d'au moins trois éléments sensiblement identiques et d'un objet cible contenus dans ladite image et le regroupement desdits au moins trois éléments sensiblement identiques en au moins une classe comporte une détection d'au moins un motif dans ladite image.

Selon un mode de réalisation particulier, la détermination de la position dans l'espace d'au moins trois éléments sensiblement identiques dans ladite au moins une classe comporte une détermination d'au moins trois éléments clairs parmi lesdits au moins trois éléments sensiblement identiques.

On entend par élément clair un élément dont le nombre de pixels dudit élément dans l'image est supérieur à une valeur seuil.

Selon un mode de réalisation particulier, ladite au moins une image de l'environnement du véhicule comprenant une route, la détermination de la position dans l'espace d'au moins trois éléments sensiblement identiques dans ladite au moins une classe comporte une projection desdits au moins trois éléments sensiblement identiques sur le plan de ladite route.

Selon un mode de réalisation particulier, la détermination d'au moins une classe comprenant au moins trois éléments sensiblement identiques régulièrement espacés parmi ladite au moins une classe comporte une détermination de l'espacement entre lesdits au moins trois éléments clairs parmi lesdits au moins trois éléments sensiblement identiques.

Selon un mode de réalisation particulier, la détermination d'au moins une position spatiale ou un paramètre cinématique dudit objet cible à partir de ladite répartition dans l'espace d'au moins trois éléments sensiblement identiques et régulièrement espacés comporte une projection de l'objet cible sur le plan de ladite route.

L'invention concerne également un dispositif embarqué à bord d'un véhicule automobile pour déterminer des positions spatiales et des paramètres cinématiques d'objets dans l'environnement dudit véhicule, ledit véhicule étant équipé d'au moins une caméra pour capturer des images de l'environnement du véhicule, lequel dispositif comprend une unité de calcul apte à mettre en œuvre le procédé tel que défini précédemment.

L'invention concerne également un véhicule automobile équipé d'au moins une caméra pour capturer des images de son environnement, comportant ledit dispositif.

Selon un mode de réalisation particulier, ledit véhicule est équipé d'un radar, ledit radar étant interfacé avec ledit dispositif embarqué.

### 5. Liste des figures

D'autres caractéristiques et avantages innovants ressortiront de la description ci-après, fournie à titre indicatif et nullement limitatif, en référence aux dessins annexés, dans lesquels :
- La figure 1 représente un organigramme conforme au procédé de l'invention ;
- La figure 2 représente une vue schématique d'un premier mode de réalisation d'un dispositif conforme à l'invention ; et
- La figure 3 représente une vue schématique d'un second mode de réalisation d'un dispositif conforme à l'invention ; et
- La figure 4 illustre le regroupement en classe d'éléments sensiblement identiques.

### 6. Description détaillée

L'invention propose une détermination de positions spatiales et de paramètres cinématiques tels que la vitesse, l'accélération ou la trajectoire d'objets cibles dans l'environnement d'un véhicule à partir d'éléments répétables de cet environnement.

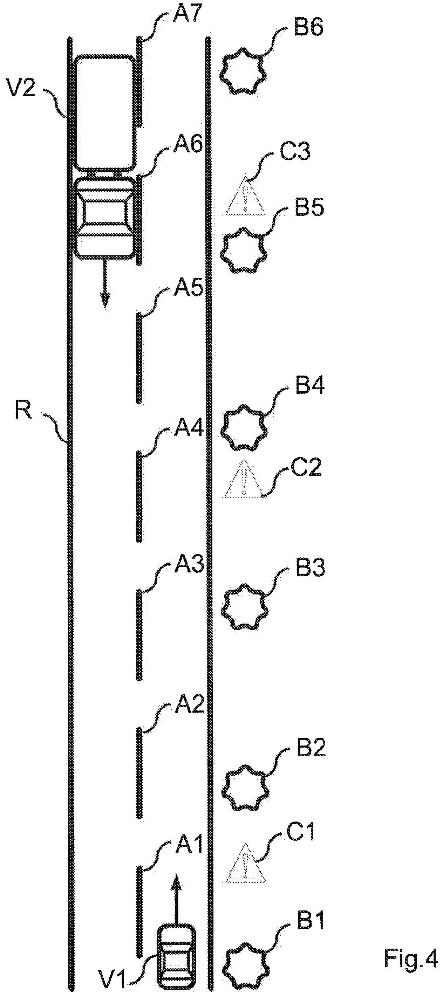

Un exemple d'application de l'invention est donné à la figure 4. Le procédé de l'invention permet à un véhicule V1 longeant une rangée d'arbres B1-B6 plantés à intervalle régulier, par exemple tous les cinquante mètres, de connaître la position et/ou la vitesse d'un objet cible, en l'occurrence, un camion V2 arrivant en sens inverse et situé entre le cinquième arbre B5 et le sixième arbre B6. Pour cela, le véhicule V1 procède de la manière suivante :
- le véhicule V1 détermine un objet cible V2 (le camion) se trouvant sur la route R,
- le véhicule V1 détermine qu'une série d'éléments sensiblement identiques et répétables B1-B6 (les arbres) se trouve le long de la route R,
- le véhicule V1 détermine l'intervalle entre les éléments sensiblement identiques successifs, soit ici cinquante mètres,
- le véhicule V1 détermine qu'il se situe au niveau du premier arbre B1,
- le véhicule V1 positionne l'objet cible V2 entre le 5^{ème} arbre B5 et le 6ème arbre B6,
- le véhicule V1 en déduit qu'il se situe à une distance de l'objet cible V2 comprise, selon l'exemple proposé, entre 200 mètres et 250 mètres,
- le véhicule V1 calcule que l'objet cible V2 passe du 6ème arbre B6 au 5ème arbre B5 en 2 secondes,
- le véhicule V1 en déduit que l'objet cible V2 se déplace à une vitesse de 25m/s (90km/h).
L'application de l'invention a donc permis au véhicule V1 de déterminer que le camion V2 arrivant sur la voie d'en face se situe à une distance d'au moins 200 mètres et se déplace à 90km/h.

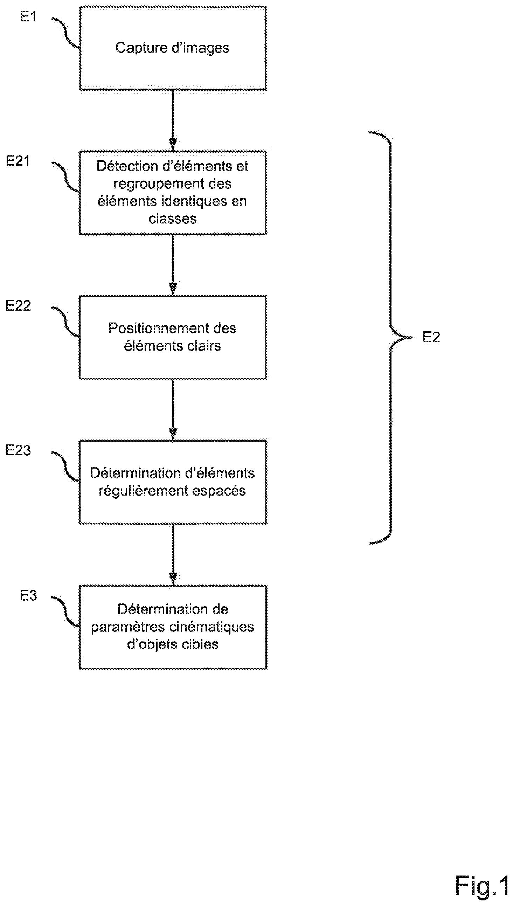

Un organigramme du procédé de détermination de positions spatiales et de paramètres cinématiques conforme à l'invention est illustré à la figure 1. Ce procédé comporte une succession d'étapes qui sont répétées en continu et à une fréquence prédéterminée tant que la détermination est active.

Selon une première étape E1, la caméra du véhicule capture des images de l'environnement du véhicule. Les images sont capturées à intervalles de temps réguliers, par exemple tous les 40ms (25 images par seconde).

Selon une étape E2, les images capturées sont traitées de manière à déterminer une répartition dans l'espace d'éléments sensiblement identiques et régulièrement espacés tels que des arbres, des lampadaires ou des bandes de marquage au sol et à identifier des objets cibles sur la route. A l'issue de cette étape, les éléments sensiblement identiques et régulièrement espacés sont détectés et leur position respective est connue. L'étape E2 comporte par exemple les trois sous-étapes E21, E22 et E23.

Selon l'étape E21, les images capturées sont traitées de manière à extraire une liste d'éléments correspondant à des éléments détectés dans l'environnement du véhicule. L'extraction de listes d'éléments s'apparente à une détection de zones d'intérêt dans les images capturées. Le traitement appliqué aux images permet également de détecter des éléments sensiblement identiques et de les regrouper en classe d'éléments sensiblement identiques.
Le traitement permettant la détection d'éléments sensiblement identiques et le regroupement des éléments sensiblement identiques est par exemple effectué par un algorithme de détection de motifs. De tels traitements peuvent être réalisés selon les méthodes et modèles proposés dans la littérature à ce sujet, voir par exemple les documentations suivantes :
- *Detecting, localisation and grouping repetead scene element from an image,* Thomas Leung and Jitendra Malik (http://www.eecs.berkeley.edu/Research/Projects/CS /vision/shape/papers/leung-ECCV96.pdf) ;
- *Detecting and Matching Repeated Patterns for Automatic Geo-tagging in Urban Environments,* Grant Schindler, Panchapagesan Krishnamurthy, Roberto Lublinerman2, Yanxi Liu, Frank Dellaert (https://smartech.gatech.edu/bitstream/handle/1853 /38342/Schindler08cvpr.pdf) ;
- *A Computational Model for Repeated Pattern Perception using Frieze and Wallpaper Groups,* Yanxi Liu and Robert T. Collins (https://www.ri.cmu.edu/pub_files/pub2/liu_yanxi_2 000_2/liu_yanxi_2000_2.pdf) ;
- *Automatic Kronecker Product Model Based Detection of Repeated Patterns in 2D Urban Images* (http://www.cv-foundation.org/openaccess/content_iccv_2013/papers /Liu_Automatic_Kronecker_Product_2013_ICCV_paper.p df).

Le regroupement d'éléments sensiblement identiques est illustré à la figure 4 :
- A1, A2...An, sont les éléments répétables de la classe A (Fig.4 : A1, A2...A7 sont par exemple des lignes blanches discontinues de marquage au sol),
- B1, B2...Bη, sont les éléments répétables de la classe B (Fig.4 : B1, B2...B5 sont par exemple des arbres),
- C1, C2...Cm, sont les éléments répétables de la classe C (Fig.4 : C1, C2, C3 sont par exemple des panneaux de signalisation),
- ...
Il est à noter qu'à cette étape du procédé, chaque classe contient des éléments sensiblement identiques mais ces éléments sensiblement identiques ne sont pas forcément régulièrement espacés. Par exemple les éléments de la classe C de la figure 4 ne sont pas régulièrement espacés.

Par ailleurs, les éléments situés sur la route sont identifiés comme étant des objets cibles. A l'issue de cette étape, une liste d'éléments est obtenue, les éléments sensiblement identiques étant associés à une classe et les objets cibles étant identifiés en tant que tels.

Selon l'étape E22, la position des éléments de chaque classe d'éléments sensiblement identiques est estimée. Cette estimation de position est avantageusement réalisée en combinant les méthodes suivantes :
- l'homographie qui permet de déterminer une distance de l'élément à la caméra en projetant ledit élément sur le plan de la route et en calculant la largeur de la route à l'endroit de la projection ; et
- un traitement d'images SfM (pour « Structure from Motion » dans la littérature anglo-saxonne) qui permet de déterminer la position d'éléments par la comparaison de plusieurs images successives.

Selon un mode de réalisation particulier, tous les éléments de chaque classe ne sont pas positionnés mais seulement les éléments dont la résolution est suffisante pour atteindre une précision acceptable lors de leur positionnement. Ainsi, seuls les éléments clairs ayant une résolution suffisante, c'est-à-dire supérieure à un seuil prédéterminé, sont positionnés. A l'issue de cette étape, une liste de correspondance associant une position à chacun des éléments clairs de l'image est obtenue.

Selon l'étape E23, les différentes classes d'éléments sont analysées grâce aux données de position obtenues à l'étape E22 pour déterminer quelles classes contiennent effectivement des éléments sensiblement identiques régulièrement espacés.

Selon un mode de réalisation particulier, pour chaque couple d'éléments clairs identiques successifs, on calcule un espacement à partir des positions obtenues en E22. Pour chaque classe contenant au moins trois éléments clairs identiques, on obtient au moins deux espacements. Lorsque l'écart entre ces au moins deux espacements au sein d'une même classe est inférieur à un certain seuil, on considère que les éléments de la classe sont régulièrement espacés. A l'issue de cette étape, on obtient une liste de classes dont les éléments sont régulièrement espacés, ladite liste associant à chaque classe un espacement entre deux éléments consécutifs. Ainsi, en combinant les informations obtenues aux étapes E21, E22 et E23, on obtient une répartition dans l'espace des éléments régulièrement espacés.

Selon l'étape E3, des positions spatiales ou des paramètres cinématiques des objets cibles identifiés en E21 sont déterminés. Les positions spatiales et les paramètres cinématiques sont déduits des informations issues de l'étape E2 concernant les objets identiques et régulièrement espacés.

Selon un mode de réalisation particulier, on projette les objets cibles sur le plan de la route et on compare la position de cette projection par rapport aux positions des éléments sensiblement identiques régulièrement espacés déterminés en E23. On peut alors déduire la position des objets cibles à partir de la position des éléments sensiblement identiques régulièrement espacés. Les positions des objets cibles au cours d'itérations successives permettent ensuite de déterminer les autres paramètres cinématiques comme la trajectoire, la vitesse ou l'accélération. En effet, les images successives permettent de positionner l'objet cible au cours du temps. Les positions successives de l'objet cible au cours du temps dessinent la trajectoire de l'objet cible. Par dérivation de la trajectoire ainsi déterminée par rapport au temps, on obtient la vitesse de l'objet cible. Par dérivation de la vitesse ainsi obtenue par rapport au temps, on obtient l'accélération de l'objet cible.

Selon un mode de réalisation particulier, le traitement prend également en compte les données du modèle véhicule pour intégrer le déplacement du véhicule aux calculs. Ce modèle véhicule peut notamment être basé sur l'odométrie pour calculer à partir de la rotation des roues la distance parcourue par le véhicule. A l'issue de cette étape, une liste d'objets cibles est obtenue, ladite liste associant aux objets cibles leurs positions spatiales et leurs paramètres cinématiques.

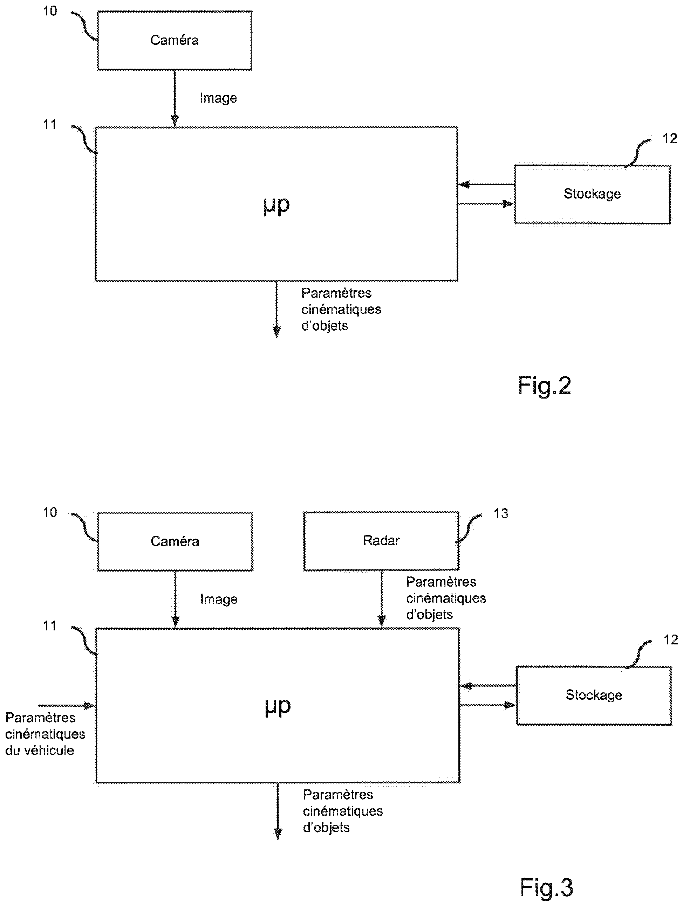

Un dispositif de détermination de positions spatiales et de paramètres cinématiques apte à mettre en œuvre le procédé de l'invention est représenté de manière schématique à la figure 2.

Le dispositif de détermination est embarqué dans un véhicule équipé d'au moins une caméra 10.

La caméra 10 a pour fonction de capturer des images de l'environnement du véhicule. Elle est par exemple positionnée dans le pare-chocs avant, la calandre du véhicule, en haut du parebrise, dans le rétroviseur du conducteur ou en tout endroit permettant de garantir l'observation de la scène entourant le véhicule avec un champ visuel large.

Le dispositif de détection comprend un module 11 de calcul, typiquement un microprocesseur. Ledit module 11 reçoit les images capturées par la caméra 10 et les traite conformément à la méthode mentionnée à l'étape E2 pour déterminer une répartition dans l'espace des éléments sensiblement identiques et régulièrement espacés et identifier des objets cibles sur la route.

La répartition dans l'espace des éléments sensiblement identiques et régulièrement espacés et la liste des objets cibles sont stockés en mémoire dans un module de stockage 12 interne ou externe du dispositif de détection.

Le dispositif comprend en outre un module de détermination de positions spatiales et de paramètres cinématiques d'objets cibles. Avantageusement, ledit module est intégré dans le module 11 de calcul. Ce module traite les informations du module de stockage contenant la répartition dans l'espace des éléments sensiblement identiques et régulièrement espacés et la liste des objets cibles conformément à la méthode décrite à l'étape E3**.** Les positions spatiales et les paramètres cinématiques des objets cibles sont également stockés en mémoire.

Un dispositif de détermination de positions spatiales et de paramètres cinématiques perfectionné apte à mettre en œuvre le procédé de l'invention est représenté de manière schématique à la figure 3.

Selon un mode de réalisation, le module 11 reçoit de la part de l'ordinateur de bord du véhicule des informations issues du modèle véhicule afin d'intégrer des données cinématiques dudit véhicule dans les calculs effectués à l'étape E3**.**

Avantageusement, le module 11 est interfacé avec un autre dispositif de détection 13 tel qu'un radar afin de détecter les éventuelles incohérences entre les deux dispositifs.

Le procédé de l'invention peut être couplé avec une gestion d'alarmes. Les informations issues de la détermination de positions spatiales et de paramètres cinématiques d'objets cibles sont traitées afin de détecter un danger tel qu'un risque de collision, une manœuvre de dépassement en présence d'un véhicule en face ou une incohérence au sein desdites informations.

Un risque de collision entre un véhicule et un objet cible peut être estimé à partir des trajectoires respectives dudit véhicule et dudit objet cible, de leur vitesse relative et de leur distance. Lorsque lesdites trajectoires se croisent et que la distance entre ledit objet cible et la voiture est inférieure à un seuil dépendant de leur vitesse relative, un risque de collision est détecté.

Par ailleurs, si le dispositif de détermination de positions spatiales et de paramètres cinématiques est interfacé avec d'autres dispositifs de détection tels qu'un radar et que leurs données pour le même paramètre cinématique d'un même objet diffèrent d'un écart supérieur à un certain seuil, une incohérence est détectée. A l'issue de la détection de dangers, les alarmes correspondant aux dangers identifiés sont émises.

Le procédé de l'invention peut être mis en œuvre dans un dispositif interfacé avec un automate de pilotage permettant de fournir au conducteur du véhicule un pilotage assisté. Les informations issues de la détermination de positions spatiales et de paramètres cinématiques d'objets cibles sont traitées afin de déterminer le comportement optimal du véhicule par exemple pour éviter un danger détecté de manière similaire à ce qui est décrit plus haut pour la gestion des alarmes. Ledit comportement optimal du véhicule comprend par exemple la trajectoire et la décélération que doit avoir le véhicule pour éviter le danger. A partir dudit comportement optimal du véhicule, des instructions de pilotage sont déterminées et transmises à l'automate de pilotage afin qu'il assiste le conducteur dans sa conduite. Par exemple, l'automate régule une vitesse permettant d'éviter une collision. Classiquement, l'action d'un automate de pilotage est sous le contrôle du conducteur qui peut reprendre la main lorsqu'il le souhaite en effectuant une certaine manipulation. Dans ce sens, l'automate de pilotage n'est usuellement pas considéré comme opérant une conduite automatique mais comme prodiguant une assistance à la conduite. Dans ce cas, le conducteur est assisté dans sa conduite en fonction des positions spatiales et des paramètres cinématiques des objets dans l'environnement du véhicule.

Le procédé de l'invention peut être mis en œuvre par l'ordinateur de bord d'un véhicule équipé d'une caméra et optionnellement d'un radar en intégrant dans l'ordinateur de bord les modules 11 et 12.

L'invention est décrite dans ce qui précède à titre d'exemple. Il est entendu que la personne de l'art est à même de réaliser différentes variantes de réalisation de l'invention, en associant par exemple les différentes caractéristiques ci-dessus prises seules ou en combinaison, sans pour autant sortir du cadre de l' invention, telle que définie par les revendications annexées.

## Revendications

1. Procédé de détermination d'au moins une position spatiale ou un paramètre cinématique, tel que la trajectoire, la vitesse ou l'accélération, d'au moins un objet cible dans l'environnement d'un véhicule, ledit véhicule étant équipé d'au moins une caméra pour capturer des images de l'environnement dudit véhicule, comprenant :
- une étape de capture (E1) d'au moins une image de l'environnement du véhicule comprenant la route sur laquelle circulent le véhicule et l'objet cible,,
**caractérisé en ce qu'il** comporte en outre les étapes suivantes :
- détermination (E2) dans ladite au moins une image de la répartition dans l'espace d'au moins trois éléments sensiblement identiques et régulièrement espacés et détermination d'au moins un objet cible ; et
- détermination (E3) d'au moins une position spatiale ou un paramètre cinématique dudit objet cible à partir de ladite répartition dans l'espace d'au moins trois éléments sensiblement identiques et régulièrement espacés,
**en ce que** l'étape de détermination (E2) de la répartition dans l'espace d'au moins trois éléments sensiblement identiques et régulièrement espacés et de détermination d'au moins un objet cible contenus dans ladite au moins une image comporte les étapes suivantes :
- E21: détection d'au moins trois éléments sensiblement identiques et d'un objet cible contenus dans ladite image et regroupement desdits au moins trois éléments sensiblement identiques en au moins une classe,
- E22: détermination de la position dans l'espace d'au moins trois éléments sensiblement identiques dans ladite au moins une classe,
- E23: détermination d'au moins une classe comprenant au moins trois éléments sensiblement identiques régulièrement espacés parmi ladite au moins une classe,
et **en ce que** lors de l'étape de détermination (E3) d'au moins une position spatiale ou un paramètre cinématique dudit objet cible, on projette ledit objet cible sur le plan de la route et on compare la position de cette projection par rapport aux positions des éléments sensiblement identiques régulièrement espacés déterminés dans l'étape E23.

2. Procédé selon la revendication précédente,
**caractérisé en ce que** l'étape de détection (E21) d'au moins trois éléments sensiblement identiques et d'un objet cible contenus dans ladite image et de regroupement desdits au moins trois éléments sensiblement identiques en au moins une classe comporte une détection d'au moins un motif dans ladite image.

3. Procédé selon la revendication 1,
**caractérisé en ce que** ladite détermination (E22) de la position dans l'espace d'au moins trois éléments sensiblement identiques dans ladite au moins une classe comporte une projection desdits au moins trois éléments sensiblement identiques sur le plan de ladite route.

4. Procédé selon la revendication 1,
**caractérisé en ce que** ladite détermination (E23) d'au moins une classe comprenant au moins trois éléments sensiblement identiques régulièrement espacés parmi ladite au moins une classe comporte une détermination de l'espacement entre lesdits au moins trois éléments clairs parmi lesdits au moins trois éléments sensiblement identiques.

5. Procédé selon la revendication 1,
**caractérisé en ce que** ladite détermination (E3) d'au moins une position spatiale ou un paramètre cinématique dudit objet cible à partir de ladite répartition dans l'espace d'au moins trois éléments sensiblement identiques et régulièrement espacés comporte une projection de l'objet cible sur le plan de ladite route.

6. Dispositif embarqué à bord d'un véhicule automobile pour déterminer des positions spatiales et des paramètres cinématiques d'objets dans l'environnement dudit véhicule, ledit véhicule étant équipé d'au moins une caméra (10) pour capturer des images de l'environnement du véhicule,
**caractérisé en ce qu'il** comprend une unité de calcul (11) apte à mettre en œuvre le procédé selon l'une quelconque des revendications 1 à 5.

7. Véhicule automobile équipé d'au moins une caméra pour capturer des images de son environnement,
**caractérisé en ce qu'il** comporte en outre un dispositif selon la revendication 6.

8. Véhicule selon la revendication 7 équipé en outre d'un radar,
**caractérisé en ce que** ledit radar est interfacé avec ledit dispositif embarqué.

## Patentansprüche

1. Verfahren zur Bestimmung mindestens einer räumlichen Position oder eines Kinematikparameters, wie etwa der Bahn, der Geschwindigkeit oder der Beschleunigung, mindestens eines Zielobjekts in der Umgebung eines Fahrzeugs, wobei das Fahrzeug mit mindestens einer Kamera ausgerüstet ist, um Bilder der Umgebung des Fahrzeugs zu erfassen, beinhaltend:
- einen Schritt des Erfassens (E1) mindestens eines Bilds der Umgebung des Fahrzeugs, das die Fahrbahn beinhaltet, auf der das Fahrzeug und das Zielobjekt fahren,
**dadurch gekennzeichnet, dass** es ferner die folgenden Schritte umfasst:
- Bestimmen (E2), in dem mindestens einen Bild, der Verteilung im Raum von mindestens drei im Wesentlichen identischen und regelmäßig beabstandeten Elementen und Bestimmen mindestens eines Zielobjekts; und
- Bestimmen (E3) mindestens einer räumlichen Position oder eines Kinematikparameters des Zielobjekts anhand der Verteilung im Raum von mindestens drei im Wesentlichen identischen und regelmäßig beabstandeten Elementen,
dass der Schritt des Bestimmens (E2) der Verteilung im Raum von mindestens drei im Wesentlichen identischen und regelmäßig beabstandeten Elementen und des Bestimmens mindestens eines Zielobjekts, die in dem mindestens einen Bild enthalten sind, die folgenden Schritte umfasst:
- E21: Detektieren von mindestens drei im Wesentlichen identischen Elementen und eines Zielobjekts, die in dem Bild enthalten sind, und Gruppieren der mindestens drei im Wesentlichen identischen Elemente in mindestens einer Klasse,
- E22: Bestimmen der Position im Raum von mindestens drei im Wesentlichen identischen Elementen in der mindestens einen Klasse,
- E23: Bestimmen mindestens einer Klasse, die mindestens drei im Wesentlichen identische, regelmäßig beabstandete Elemente beinhaltet, aus der mindestens einen Klasse,
und dass während des Schritts des Bestimmens (E3) mindestens einer räumlichen Position oder eines Kinematikparameters des Zielobjekts das Zielobjekt auf die Ebene der Fahrbahn projiziert wird und die Position dieser Projizierung mit den Positionen der im Wesentlichen identischen, regelmäßig beabstandeten Elemente, die in Schritt E23 bestimmt wurden, verglichen wird.

2. Verfahren nach dem vorhergehenden Anspruch,
**dadurch gekennzeichnet, dass** der Schritt des Detektierens (E21) von mindestens drei im Wesentlichen identischen Elementen und eines Zielobjekts, die in dem Bild enthalten sind, und des Gruppierens der mindestens drei im Wesentlichen identischen Elemente in mindestens einer Klasse das Detektieren mindestens eines Musters in dem Bild umfasst.

3. Verfahren nach Anspruch 1,
**dadurch gekennzeichnet, dass** das Bestimmen (E22) der Position im Raum von mindestens drei im Wesentlichen identischen Elementen in der mindestens einen Klasse das Projizieren der mindestens drei im Wesentlichen identischen Elemente auf die Ebene der Fahrbahn umfasst.

4. Verfahren nach Anspruch 1,
**dadurch gekennzeichnet, dass** das Bestimmen (E23) mindestens einer Klasse, die mindestens drei im Wesentlichen identische, regelmäßig beabstandete Elemente beinhaltet, aus der mindestens einen Klasse das Bestimmen der Beabstandung zwischen den mindestens drei klaren Elementen aus den mindestens drei im Wesentlichen identischen Elementen umfasst.

5. Verfahren nach Anspruch 1,
**dadurch gekennzeichnet, dass** das Bestimmen (E3) mindestens einer räumlichen Position oder eines Kinematikparameters des Zielobjekts anhand der Verteilung im Raum von mindestens drei im Wesentlichen identischen und regelmäßig beabstandeten Elementen das Projizieren des Zielobjekts auf die Ebene der Fahrbahn umfasst.

6. Vorrichtung, die sich an Bord eines Kraftfahrzeugs befindet, um räumliche Positionen und Kinematikparameter von Objekten in der Umgebung des Fahrzeugs zu bestimmen, wobei das Fahrzeug mit mindestens einer Kamera (10) ausgerüstet ist, um Bilder der Umgebung des Fahrzeugs zu erfassen,
**dadurch gekennzeichnet, dass** sie eine Recheneinheit (11) beinhaltet, die dazu fähig ist, das Verfahren nach einem der Ansprüche 1 bis 5 umzusetzen.

7. Kraftfahrzeug, das mit mindestens einer Kamera ausgerüstet ist, um Bilder seiner Umgebung zu erfassen, **dadurch gekennzeichnet, dass** es ferner eine Vorrichtung nach Anspruch 6 umfasst.

8. Fahrzeug nach Anspruch 7, das ferner mit einem Radar ausgerüstet ist,
**dadurch gekennzeichnet, dass** das Radar über eine Schnittstelle mit der an Bord befindlichen Vorrichtung verbunden ist.

## Claims

1. Method for determining at least one spatial position or kinematic parameter, such as the trajectory, speed or acceleration, of at least one target object in the environment of a vehicle, said vehicle being equipped with at least one camera for capturing images of the environment of said vehicle, comprising:
- a step of capturing (E1) at least one image of the environment of the vehicle comprising the road on which the vehicle and the target object are travelling,
**characterized in that** it furthermore comprises the following steps:
- determining (E2), in said at least one image, the spatial distribution of at least three substantially identical and regularly spaced elements, and determining at least one target object; and
- determining (E3) at least one spatial position or kinematic parameter of said target object based on said spatial distribution of at least three substantially identical and regularly spaced elements,
**in that** the step of determining (E2) the spatial distribution of at least three substantially identical and regularly spaced elements and of determining at least one target object contained in said at least one image comprises the following steps:
- E21: detecting at least three substantially identical elements and a target object that are contained in said image, and grouping said at least three substantially identical elements into at least one class,
- E22: determining the spatial position of at least three substantially identical elements in said at least one class,
- E23: determining at least one class comprising at least three substantially identical elements that are regularly spaced among said at least one class,
and **in that**, during the step of determining (E3) at least one spatial position or kinematic parameter of said target object, said target object is projected onto the plane of the road and the position of this projection is compared with the positions of the substantially identical regularly spaced elements determined in step E23.

2. Method according to the preceding claim,
**characterized in that** the step of detecting (E21) at least three substantially identical elements and a target object that are contained in said image and of grouping said at least three substantially identical elements into at least one class comprises detecting at least one pattern in said image.

3. Method according to Claim 1,
**characterized in that** said determining (E22) the spatial position of at least three substantially identical elements in said at least one class comprises projecting said at least three substantially identical elements onto the plane of said road.

4. Method according to Claim 1,
**characterized in that** said determining (E23) at least one class comprising at least three substantially identical elements that are regularly spaced among said at least one class comprises determining the spacing between said at least three clear elements among said at least three substantially identical elements.

5. Method according to Claim 1,
**characterized in that** said determining (E3) at least one spatial position or kinematic parameter of said target object based on said spatial distribution of at least three substantially identical and regularly spaced elements comprises projecting the target object onto the plane of said road.

6. On-board device on board a motor vehicle for determining spatial positions and kinematic parameters of objects in the environment of said vehicle, said vehicle being equipped with at least one camera (10) for capturing images of the environment of the vehicle, **characterized in that** it comprises a computing unit (11) able to implement the method according to any one of Claims 1 to 5.

7. Motor vehicle equipped with at least one camera for capturing images of its environment,
**characterized in that** it furthermore comprises a device according to Claim 6.

8. Vehicle according to Claim 7, furthermore equipped with a radar,
**characterized in that** said radar is interfaced with said on-board device.
